# EUROPEAN PATENT SPECIFICATION

(11) **EP 3 883 801 B1**
(45) Date of publication and mention of the grant of the patent: **15.03.2023**
(21) Application number: 19805297.9
(22) Date of filing: 19.11.2019
(51) Int. Cl.: B60K 6/442, B60K 6/387, B60K 17/28, B60W 20/20, B60W 10/02, B60W 10/06, B60W 10/08, B60W 10/30, B60W 30/188, B60K 6/547, B60K 6/40

(54) **SPECIALTY TRACTOR**
SPEZIALTRAKTOR
TRACTEUR SPÉCIFIQUE

(30) Priority: 21.11.2018 IT 201800010486
(43) Date of publication of application: 29.09.2021
(73) Proprietor: CNH Industrial Italia S.p.A., 10135 Turin (IT)
(72) Inventor: FORTE, Michelantonio, 41100 Modena (IT); BORGHI, Alberto, 42033 Carpineti (IT)
(74) Representative: CNH Industrial IP Department
(86) International application number: PCT/EP2019/081805
(87) International publication number: WO 2020/104459

(56) References cited:
- EP-A1- 0 693 392
- WO-A1-2011/138308
- CN-U- 203 460 687
- DE-A1- 19 749 074
- US-A1- 2018 022 337

## Description

### Technical field

The present invention relates to a specialty tractor.

### Background of the invention

Specialty tractors are low power tractors (usually around 100 hp), small and narrow, whose working weight rarely exceeds 3 tons. Their main usage is to support specialized operations for orchard and vineyard agriculture: therefore they must cope with hard environments such as narrow spaces of maneuver, difficult grounds such as hills. A specialty tractor has a diesel engine provided with a powertrain wherein a manual transmission transmits the torque generated by the engine to the wheels of the tractor. Specialty tractors are normally used with implements (the working mission of the specialty tractor is to spend the 80% of its working time using the PTO and power hydraulics) that are powered by the Power Take Off (PTO) available on the tractor. In several applications, the users need to have the angular speed of the PTO independent (i.e. decoupled) from the tractor ground speed. Normally this decoupling function is obtained by using a CVT transmission installed in the PTO box; however, specialty tractors have constraints in term of available space and CVT transmission cannot be installed in the PTO box as a rule. EP0693392A1 and US2018/022337A1 both show a configuration to control the PTO speed. Other references can be found in the following patent applications: DE19749074A1 discloses the use of a PTO, WO2011/138308A1 and CN203460687U disclose a tractor with hybrid power system.

The aim of the present invention is to provide with a low cost and a with a simple solution a specialty tractor whose PTO angular speed is independent from the ground speed of the tractor. The present invention is also focused in obtaining the above aim without modifying the original mechanical structure of the mechanical transmission that, as a rule, is quite simple, robust and cheap. In other words, the architecture of the powertrain of an already existing specialty tractor may be updated and upgraded to an Hybrid Electric Diesel configuration in order to offer a wide series of advantages to the customers.

### Summary of the invention

The above is obtained by the present invention that relates to a specialty tractor provided with a diesel engine coupled with a powertrain including a clutch and a manual shift transmission having an output shaft that is designed to transmits power to the wheels of the tractor, the diesel engine is also coupled with a PTO box having a PTO shaft that is used to power implements that can be towed/carried by the tractor, characterized by comprising an electric generator receiving torque directly from the diesel engine and providing electric power to an energy accumulator such as a battery or a supercapacitor; power electronics is designed to draw up electrical power from the energy accumulator to supply an electric motor whose output shaft may be connected /disconnected though a power transmission to said output shaft; an electronic unit for controlling power electronics and said power transmission, the electronic unit being configured to perform at least:
a first operating mode wherein the clutch is opened and the manual transmission does not receive any torque from the diesel engine; the electric motor supplied by the energy of the accumulator transmits torque to the wheels of the tractor that moves on the ground with a speed lower than a speed limit; the diesel engine is controlled so that it has a set Rpm that produces a desired angular speed of the PTO shaft making the angular speed of the PTO shaft independent from the speed of the tractor on the ground; and
a second operating mode wherein the clutch is closed and the manual transmission receives torque from the diesel engine so that the engine-torque is transmitted to the wheels of the tractor that moves at a speed higher than the speed limit; during the second operating mode the electric motor is unpowered.

### Brief description of the drawings

The invention shall be described in the accompanied drawings that represent a not - limiting example of the invention wherein;
Figure 1 represents schematically the transmission of a specialty tractor operating according to the present invention; and
Figures 2, 3 and 4 shown a specialty tractor operating according to an embodiment of the present invention.

### Detailed description of the invention

Numeral 1 indicates a specialty tractor, i.e. a tractor having a power around 100 hp, whose working weight rarely exceed 3 tons. The main usage of specialty tractor 1 is to support specialized operations for orchard and vineyard agriculture.

Specialty tractor is provided with a diesel engine 2 coupled with a conventional powertrain 3 to provide torque to the wheels 4 of the tractor 1. Powertrain 3 includes a mechanical clutch 5 (of a known kind, for instance an hydraulic or electric actuated clutch) having an input shaft 5-a connected with an output shaft 2-a of the diesel engine 2 and an output shaft 5-b connected with an input shaft 6-a of a manual shift transmission 6 having an output shaft 6-b that transmits power to the rear axle of the tractor to power rear wheels 4. Gear ratios are manual shifted in manual transmission 6.

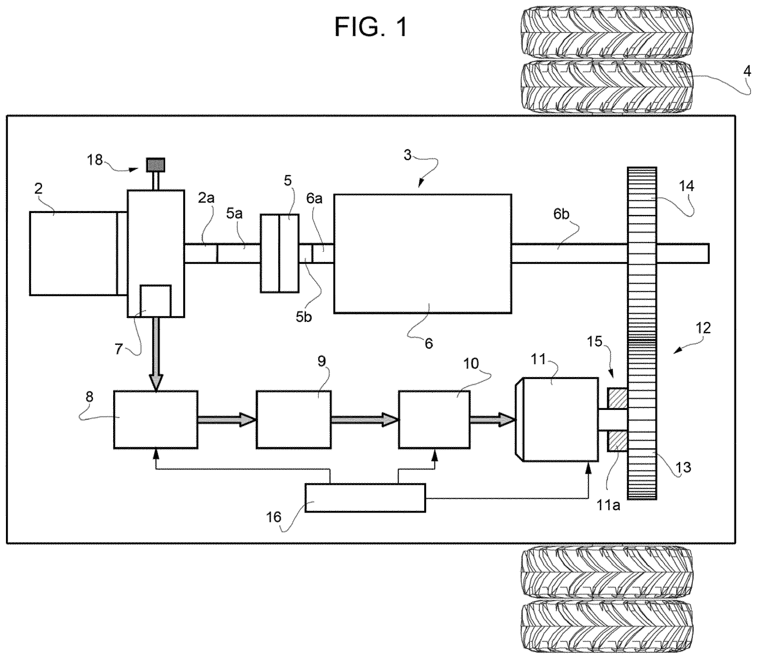

According to the present invention, an electric generator 7 receives torque from the output shaft 2-a of the diesel engine 2 and provides electric power to a first power electronics 8 that stores the electric power in an energy accumulator 9 such as a battery, a battery pack or a supercapacitor. A second power electronics 10 is designed to draw up electrical power from energy accumulator 9 to supply an electric motor 11 whose output shaft 11-a may be connected though a power transmission 12 to the output shaft 6-b. The transmission 12 (of know kind) establishes specific gear ratio to the output shaft 6-a and has been schematized in figure 1 by means of a couple of gears 13,14 mounted respectively on shafts 11-a and 6-a and mating one with the other. Of course, the structure of the transmission 12 may be quite different from those represented. A clutch 15 (in the example a dog clutch) is provided along the power transmission to selectively connect /disconnect the output shaft 11-a of the electric motor with the output shaft 6-a of the manual transmission.

Typically the electric motor 11 has a power preferably not exceeding 25 kW and is supplied by the second power electronics 10 with a voltage not exceeding 70 V (48 Volts most preferably) so that the complete installation of energy accumulator 9 and electric motor 11 is a low voltage installation type with a big simplification in terms of safety and packaging.

An electronic unit 16 controls first and second power electronics 8 and 10 and the actuators (not shown) that controls the clutch 15.

The output shaft of the diesel engine 2 is also coupled with a PTO box having a PTO shaft 18 that is used to power an implement that may be towed/carried by the tractor 1.

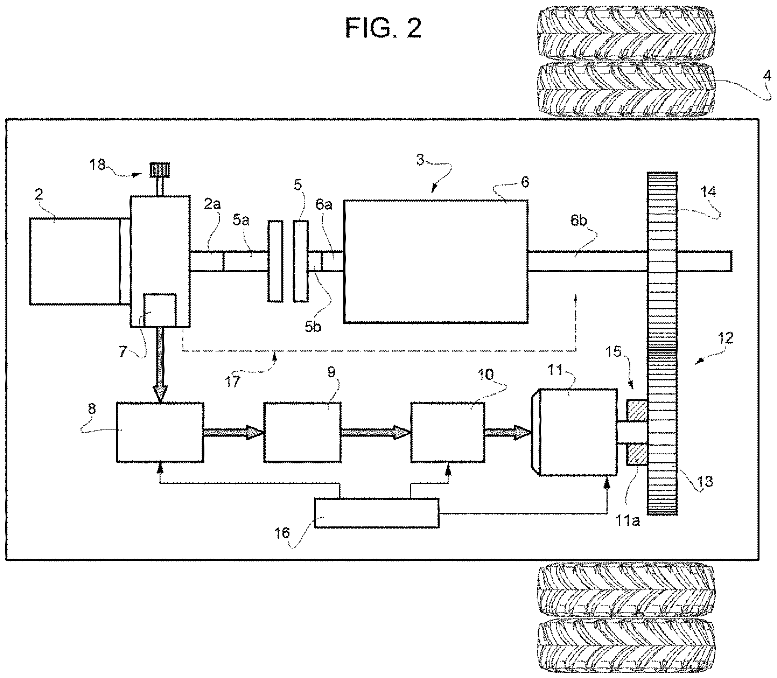

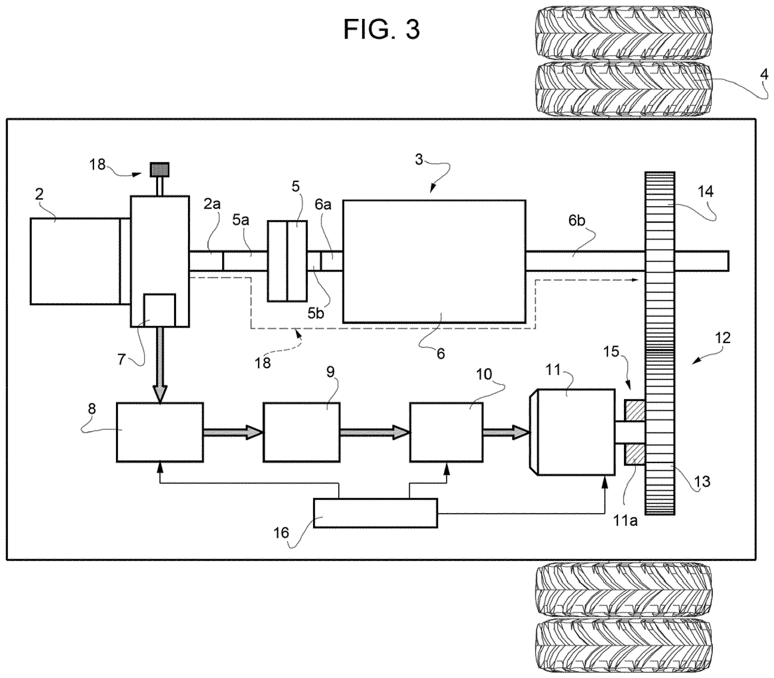

The electronic unit 16 is designed to detect the ground speed of the tractor in order to perform at least the following operating modes:
A first operating mode (figure 2) wherein the clutch 5 is opened and the manual transmission 6 does not receive any torque from the diesel engine 2. The clutch 15 is closed and the electric motor 11 powered by the energy accumulator 9 transmits torque to the wheels 4 of the tractor that moves at low speed with the behavior of a CVT. Low speed means that the speed is lower than a speed limit; most preferably tractor ground speed may be comprised in the following speed interval 4,5-18 km/h. Power is thus supplied from the diesel engine 2 to the electric motor 11 through an electrical path 17 and energy accumulator 9 acts as a power reserve. During the first operating mode, the diesel engine 2 is controlled so that it has a set Rpm that produces a desired angular speed of the PTO shaft 17. The angular speed of the PTO shaft 18 is independent (i.e. decoupled) from the ground speed of the tractor 1;
A second operating mode (figure 3) wherein the clutch 5 is closed and the manual transmission 6 receives torque from the diesel engine 2 so that the torque is transmitted through a mechanical path 18 to the wheels of the tractor that moves at a speed higher than the speed limit (in the example 18 Km/h) ; during the second operating mode the clutch 15 is opened and that first power electronics 8 does not power the motor 11 that is inactive.

The control of the engine speed in the first operating mode may be determined by means of a user selectable device, for instance a joystick installed in the cab of the tractor 1.

The advantages are the following:
a) The specialty tractor may be easily driven as a CVT tractor where the PTO angular speed may be kept independent form the tractor's speed; accordingly the driver may stay concentrated on the field operations required by the implement usage and has not to shift the manual transmission and/or to accelerate and decelerate in order to reach the desired PTO angular speed.
b) as consequence of the a) point, the driver can increase the productivity of the tractor in in operations that do not require traction efforts as it is often the case for specialty tractors , as the first operating mode eliminates the need of shifting;
c) the motion of the tractor at low speed according to the first operating mode may be easily controlled as the electric motor 11 enables a simple and comfortable power shuttling and deceleration and motion reversal are achieved by reversing the sense of rotation of the electric motor 11;
d) the same is true for inching operations at very low speed, greatly facilitated by the usage of the electric motor 11 (implement attach);
e) safety is also increased. As the traction is always active at low speed. This is quite important on severe slope, side hill, wherein manual gear shifting creates a gap in traction that can be dangerous.
f) Additional functionality, as zero ground speed holding the tractor stationary on the hill side, can be easily achieved by controlling in torque the electric motor 11 at zero speed;
g) low cost and low maintenance cost. As a low power - low tension electric motor 11 is used the costs are also reduced. The cost of the electric machines is in fact directly related to their size that depends on the generated power.

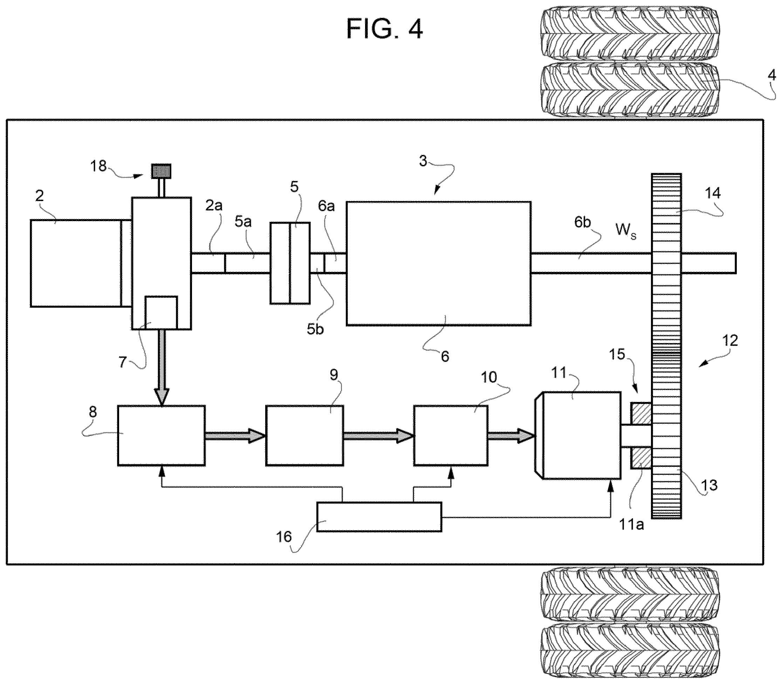

The above advantages are obtained without modifying the architecture of an already existing power train 3. Long development times of a new powertrain are not necessary. With the design proposed in the present invention, the impact for R&D cost and for the validation cost, would be much less than for tractor provided with a CVT transmission. In addition to what above stated, the electronic unit 16 is also configured for executing the following operating mode:
A third operating mode (boost mode, figure 4) wherein the clutch 5 is closed and the manual transmission receives torque from the diesel engine 2 so that the output shaft (6-b) of the manual shift transmission rotates at an angular speed ωₛ and torque produced by the engine 2 is transmitted to the wheels 4 of the tractor that moves on the ground.

According to the third operating mode the clutch 15 is closed and the electric motor 11 powered by the energy accumulator 9 is electrically controlled by the second power electronic 10 so that the angular speed of its output shaft 11-a produces, at the output of the power transmission, a speed ωₛ so that the torque produced by the electric motor is added to the torque provided by the engine to provide an extra torque to the wheels.

The third operating mode may be enabled for a short time (some seconds typically) to provide an extra torque (the torque is almost doubled) in particular condition, for instance when the specialty tractor has to overcome an obstacle, for instance an extra slope to climb. The energy necessary to be provided is drawn from the energy accumulator 9 that is rapidly discharged.

## Claims

1. Specialty tractor provided with a diesel engine (2) coupled with a powertrain (3) including a clutch (5) and a manual shift transmission (6) having an output shaft (6-b) that is designed to transmits power to the wheels (4) of the tractor, the diesel engine (2) is also coupled with a PTO box having a PTO shaft (18) for powering towable implements,
**characterized by** comprising an electric generator (7) receiving torque directly from the diesel engine (2) and providing electric power to an energy accumulator (9) such as a battery or a supercapacitor; power electronics (10) is designed to draw up electrical power from the energy accumulator (9) to supply an electric motor (11) whose output shaft (11-a) may be connected /disconnected though a power transmission (12) to said output shaft (6-b);
an electronic unit (16) for controlling power electronics (10) and said power transmission, the electronic unit being configured to perform at least:
a first operating mode wherein the clutch (5) is opened and the manual transmission (6) does not receive any torque from the diesel engine (2); the electric motor (11) supplied by the energy of the accumulator (9) transmits torque to the wheels (4) of the tractor that moves on the ground with a speed lower than a speed limit; the diesel engine (2) is controlled so that it has a set Rpm that produces a desired angular speed of the PTO shaft (18) making the angular speed of the PTO shaft (18) independent from the speed of the tractor (1) on the ground; and
a second operating mode wherein the clutch (5) is closed and the manual transmission (6) receives torque from the diesel engine (2) so that the engine-torque is transmitted to the wheels of the tractor that moves at a speed higher than the speed limit; during the second operating mode the electric motor (11) is unpowered.

2. Specialty tractor as defined in claim 1, wherein a clutch (15), in particular a dog clutch, is provided along the power transmission to selectively connect /disconnect the output shaft (11-a) of the electric motor with the output shaft (6-a) of the manual shift transmission.

3. Specialty tractor as defined in claim 1, wherein
the electric motor (11) has a power not exceeding 25 kW and is supplied with a voltage not exceeding 70 V so that the complete installation of energy accumulator (9) and electric motor (11) is a low voltage installation.

4. Specialty tractor as defined in any of the proceedings claims, wherein the electronic unit is designed to provide a third operating mode wherein the clutch (5) is closed and the manual transmission receives torque from the diesel engine (2) so that the output shaft (6-b) of the manual shift transmission (6) rotates at an angular speed ωₛ and torque produced by the engine is transmitted to the wheels of the tractor that moves on the ground;
according to the third operating mode a clutch (15) of the power transmission (12) is closed and the electric motor (11) powered by the energy accumulator (9) is electrically controlled so that the angular speed of its output shaft (11-a) produces, at the output of said power transmission (12), a speed ωₛ so that the torque produced by the electric motor is added to the torque provided by the engine to provide an extra torque to the wheels.

## Patentansprüche

1. Spezialtraktor, der mit einem Dieselmotor (2) ausgestattet ist, der mit einem Antriebsstrang (3) verbunden ist, der eine Kupplung (5) und ein manuelles Schaltgetriebe (6) mit einer Ausgangswelle (6-b) umfasst, die dazu eingerichtet ist, eine Antriebskraft auf die Räder (4) des Traktors zu übertragen, wobei der Dieselmotor (2) außerdem mit einem Zapfwellengetriebe mit einer Zapfwelle (18) zum Antrieb von Anbaugeräten verbunden ist,
**dadurch gekennzeichnet, dass** ein elektrischer Generator (7) ein Drehmoment direkt von dem Dieselmotor (2) empfängt und einen Energiespeicher (9), wie zum Beispiel eine Batterie oder einen Superkondensator, mit elektrischer Energie versorgt; wobei eine Leistungselektronik (10) dazu eingerichtet ist, elektrische Energie aus dem Energiespeicher (9) zu beziehen, um einen Elektromotor (11) zu versorgen, dessen Ausgangswelle (11-a) durch eine Kraftübertragungseinrichtung (12) mit der Ausgangswelle (6-b) verbunden /getrennt sein kann;
eine elektronische Einheit (16) zur Steuerung der Leistungselektronik (10) und der Kraftübertragungseinrichtung, wobei die elektronische Einheit dazu eingerichtet ist, mindestens auszuführen:
eine erste Betriebsweise, wobei die Kupplung (5) geöffnet ist und das manuelle Schaltgetriebe (6) kein Drehmoment von dem Dieselmotor (2) empfängt; wobei der Elektromotor (11), der von der Energie des Energiespeichers (9) versorgt wird, ein Drehmoment auf die Räder (4) des Traktors überträgt, der sich auf dem Boden mit einer Geschwindigkeit bewegt, die kleiner als eine Geschwindigkeitsgrenze ist; wobei der Dieselmotor (2) so gesteuert wird, dass dieser eine festgelegte Drehzahl aufweist, die eine gewünschte Winkelgeschwindigkeit der Zapfwelle (18) bewirkt, wodurch die Winkelgeschwindigkeit der Zapfwelle (18) unabhängig von der Geschwindigkeit des Traktors (1) auf dem Boden gemacht wird; und
eine zweite Betriebsweise, wobei die Kupplung (5) geschlossen ist und das manuelle Schaltgetriebe (6) ein Drehmoment von dem Dieselmotor (2) empfängt, so dass das Motordrehmoment auf die Räder des Traktors übertragen wird, der sich mit einer Geschwindigkeit bewegt, die höher als die Geschwindigkeitsgrenze ist; wobei während der zweiten Betriebsweise der Elektromotor (11) nicht angetrieben wird.

2. Spezialtraktor wie in Anspruch 1 definiert, wobei eine Kupplung (15), insbesondere eine Klauenkupplung, vor der Kraftübertragungseinrichtung zum wahlweisen Verbinden /Trennen der Ausgangswelle (11-a) des Elektromotors mit der Ausgangswelle (6-a) des manuellen Schaltgetriebes vorgesehen ist.

3. Spezialtraktor wie in Anspruch 1 definiert, wobei der Elektromotor (11) eine Leistung von nicht mehr als 25 kW aufweist und mit einer Spannung von nicht mehr als 70 V versorgt wird, so dass die gesamte Einrichtung des Energiespeichers (9) und des Elektromotors (11) eine Niederspannungseinrichtung ist.

4. Spezialtraktor wie in einem der vorherigen Ansprüche definiert, wobei die elektronische Einheit dazu eingerichtet ist, eine dritte Betriebsweise bereitzustellen, wobei die Kupplung (5) geschlossen ist und das manuelle Schaltgetriebe ein Drehmoment von dem Dieselmotor (2) empfängt, so dass sich die Ausgangswelle (6-b) des manuellen Schaltgetriebes (6) bei einer Winkelgeschwindigkeit ωₛ dreht und das Drehmoment, das von dem Motor erzeugt wird, auf die Räder des Traktors übertragen wird, der sich über den Boden bewegt;
wobei gemäß der dritten Betriebsweise eine Kupplung (15) der Kraftübertragungseinrichtung (12) geschlossen ist und der Elektromotor (11), der von dem Energiespeicher (9) angetrieben wird, derart elektronisch gesteuert ist, dass die Winkelgeschwindigkeit seiner Ausgangswelle (11-a) an dem Ausgang der Kraftübertragungseinrichtung (12) eine Geschwindigkeit ωₛ erzeugt, so dass das Drehmoment, das von dem Elektromotor erzeugt wird, zu dem Drehmoment, das von dem Motor bereitgestellt wird, hinzugefügt wird, um ein zusätzliches Drehmoment auf die Räder zu übertragen.

## Revendications

1. - Tracteur spécialisé fourni avec un moteur diesel (2) relié à un groupe propulseur (3) comprenant un embrayage (5) et une transmission manuelle (6) ayant un arbre de sortie (6-b) qui est conçu pour transmettre de la puissance aux roues (4) du tracteur, le moteur diesel (2) est également relié à une boîte de prise de force ayant un arbre de prise de force (18) pour la motorisation d'outils tractables,
**caractérisé en ce qu'**il comprend un générateur électrique (7) recevant un couple directement du moteur diesel (2) et fournissant de la puissance électrique à un accumulateur d'énergie (9) comme une batterie ou un supercondensateur ; l'électronique de puissance (10) est conçue pour prélever la puissance électrique de l'accumulateur d'énergie (9) pour alimenter un moteur électrique (11) dont l'arbre de sortie
(11-a) peut être connecté/déconnecté par une transmission de puissance (12) audit arbre de sortie (6-b) ;
une unité électronique (16) pour commander l'électronique de puissance (10) et ladite transmission de puissance, l'unité électronique étant configurée pour effectuer au moins :
un premier mode de fonctionnement dans lequel l'embrayage (5) est ouvert et la transmission manuelle (6) ne reçoit aucun couple du moteur diesel (2) ; le moteur électrique (11) alimenté par l'énergie de l'accumulateur (9) transmet le couple aux roues (4) du tracteur qui se déplace sur le sol avec une vitesse inférieure à une limite de vitesse ; le moteur diesel (2) est commandé de sorte à avoir un Rpm déterminé qui produit une vitesse angulaire désirée de l'arbre de prise de force (18) rendant la vitesse angulaire de l'arbre de prise de force (18) indépendante de la vitesse du tracteur (1) sur le sol ; et
un deuxième mode de fonctionnement dans lequel l'embrayage (5) est fermé et la transmission manuelle (6) reçoit le couple du moteur diesel (2) de sorte que le couple moteur est transmis aux roues du tracteur qui se déplace à une vitesse supérieure à la limite de vitesse ; pendant le deuxième mode de fonctionnement, le moteur électrique (11) est non alimenté.

2. Tracteur spécialisé selon la revendication 1, dans lequel un embrayage (15), plus particulièrement un embrayage à griffes, est fourni le long de la transmission de puissance pour sélectivement connecter/déconnecter l'arbre de sortie (11-a) du moteur électrique avec l'arbre de sortie (6-a) de la transmission manuelle.

3. Tracteur spécialisé selon la revendication 1, dans lequel
le moteur électrique (11) a une puissance ne dépassant pas 25 kW et est alimenté par une tension ne dépassant pas 70 V de sorte que l'installation complète de l'accumulateur d'énergie (9) et du moteur électrique (11) est une installation basse tension.

4. Tracteur spécialisé selon l'une quelconque des revendications précédentes, dans lequel l'unité électronique est conçue pour fournir un troisième mode de fonctionnement dans lequel l'embrayage (5) est fermé et la transmission manuelle reçoit le couple du moteur diesel (2) de sorte que l'arbre de sortie (6-b) de la transmission manuelle (6) tourne en rotation à une vitesse angulaire coₛ et le couple produit par le moteur est transmis aux roues du tracteur qui se déplace sur le sol ;
selon le troisième mode de fonctionnement, un embrayage (15) de la transmission de puissance (12) est fermé et le moteur électrique (11) alimenté par l'accumulateur d'énergie (9) est commandé électroniquement de sorte que la vitesse angulaire de son arbre de sortie (11a) produit, à la sortie de ladite transmission de puissance (12) une vitesse co, de sorte que le couple produit par le moteur électrique est ajouté au couple produit par le moteur pour fournir un couple supplémentaire aux roues.
